# EUROPEAN PATENT APPLICATION

(11) **EP 4 592 247 A1**
(43) Date of publication of application: **30.07.2025**
(21) Application number: 24217712.9
(22) Date of filing: 05.12.2024
(51) Int. Cl.: C01C 1/04, B01J 8/02, F28D 20/00

(54) **AMMONIA SYNTHESIS SYSTEM AND ITS OPERATION METHOD**

(30) Priority: 23.01.2024 KR 20240010289
(71) Applicant: SK Innovation Co., Ltd., Seoul 03188 (KR)
(72) Inventor: JEONG, Jae Hun, 34124 Daejeon (KR); SONG, Da Eun, 34124 Daejeon (KR); LEE, Jun Young, 34124 Daejeon (KR); IM, Ju Hwan, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

Provided are an ammonia synthesis system and its operation method, the system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a mixed gas heat exchanger for supplying heat to the mixed gas by heat-exchanging the mixed gas fed through the mixed gas supply line with a heat storage medium.

## Description

### TECHNICAL FIELD

The present disclosure generally relates to an ammonia synthesis system and its operation method.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find out ways and means for storing and transporting renewable energy. For example, renewable energy, which is abundant in the equatorial and southern hemisphere areas, is required to be transported to the northern hemisphere where renewable energy is in high demand.

In addition, renewable energy is not stable and may vary from time to time. Due to its rather high temporal variability, effective use of renewable energy requires storage devices for storing electricity produced from renewable power sources. Ammonia is spotlighted as an energy carrier to solve the problems occurring from the area ubiquity and temporal variability of renewable energy. In particular, ammonia may be liquefied at room temperature and at pressures of 8.5 atmospheres or lower, and thus be stored and transported more easily than hydrogen. Therefore, as an alternative to solve the problems occurring from the area ubiquity and temporal variability of renewable energy, a method of synthesizing ammonia is being developed, which is produced from hydrogen and nitrogen using electricity produced from renewable energy.

For example, hydrogen, one of the main raw material for the ammonia synthesis, may be produced by a water electrolyzer powered by renewable energy such as solar or wind energy. One issue that needs to be addressed is that renewable energy, such as, for example, solar energy or wind energy is not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, a flow rate distribution upstream of a catalyst bed included in an ammonia synthesis reactor get more and more less uniform when a flow rate of the raw material such as hydrogen fed into the ammonia synthesis system decreases or increases.

In addition, in a conventional ammonia synthesis system, a temperature deviation may occur between the central and outer parts of the catalyst bed especially at the beginning of its operation, which may reduce an ammonia synthesis yield.

Therefore, there is a need for an ammonia synthesis system and its operation method which can operate efficiently with hydrogen from a renewable energy process. The ammonia synthesis system will need to be able to cope with the changes in the flow rate that occurs during the production cycle, while solving the problems of the non-uniform flow rate distribution that occurs upstream of the catalyst bed and the reduced ammonia synthesis yield caused by the temperature deviation in or between the central and outer parts of the catalyst bed at the beginning of the operation.

In addition, there is a need for an ammonia synthesis system and its operation method that may improve energy efficiency of the entire ammonia synthesis system because the energy efficiency of the ammonia synthesis system may be decreased based on the change in the flow rate that occurs during the production cycle.

### SUMMARY

An embodiment of the present disclosure relates to an ammonia synthesis system which may manage effciently a change in a flow rate of a raw material feed that occurs during a production cycle.

Another embodiment of the present disclosure relates to an ammonia synthesis system which may maintain a uniform flow rate distribution upstream of a catalyst bed included in an ammonia synthesis reactor even when a flow rate of a raw material, such as hydrogen, fed into the ammonia synthesis system is decreased.

Still another embodiment of the present disclosure relates to an ammonia synthesis system which may improve an ammonia synthesis yield by reducing a temperature deviation between the central and outer parts of a catalyst bed at the start of the operation of the catalyst bed.

Another embodiment of the present disclosure relates to an ammonia synthesis system which may improve an ammonia synthesis yield at the beginning of its operation by preheating a catalyst bed at the beginning of its operation.

Another embodiment of the present disclosure relates to an ammonia synthesis system which may save energy by optimizing an amount of energy required by the system during its operation.

Another embodiment of the present disclosure relates to an ammonia synthesis system and a method of operating the same with substantially improved energy efficiency by more efficient management of flow rate changes that may occur during a production cycle.

An embodiment of the present disclosure relates to an ammonia synthesis system which may increase a catalyst replacement cycle by improved, more uniform utilization of each catalyst bed during operation.

According to one embodiment of the present disclosure, there is provided an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a mixed gas heat exchanger for supplying heat to the mixed gas by heat-exchanging the mixed gas fed through the mixed gas supply line with a heat storage medium.

The system may further include a storage tank for storing the heat storage medium.

The mixed gas heat exchanger may be a multi-fluid heat exchanger.

The heat storage medium may include molten salt.

The system may further include a microwave heating device for emitting microwaves to each of the two or more catalyst beds.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipes may have a bottom surface and a side surface connecting the bottom surface with the distribution plate, a plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, a plurality of lower openings may be formed in a side surface of a lower part of the mixed gas flow pipe spaced apart from each other along the circumference, and the mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

Each of the mixed gas supply lines may independently include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge disposed at a position on each circumference part of the plurality of openings included in each of the backflow prevention plates.

A coupling part of the hinge that is coupled to the hinge may include a spring to apply an elastic force in a direction in which the backflow prevention cap approaches the distribution plate.

The distribution device may have a disk shape or a toroidal shape.

In a further aspect, a method for ammonia synthesis is provided, in which method the ammonia synthesis system disclosed herein is used.

In a respective ammonia synthesis system or method, mmmonia may be synthesized in the ammonia synthesis system at 10 to 300 bar.

Ammonia may be synthesized in the ammonia synthesis system or method at 200 to 700°C.

The system may further include a cooling heat exchanger disposed downstream from each of the two or more catalyst beds to remove heat from an effluent of the catalyst bed.

According to another embodiment of the present disclosure there is provided an operation method of an ammonia synthesis system as described above, the method including the following modes performed by the ammonia synthesis system as described above: a first mode in which heat is supplied to the heat storage medium by heat-exchanging syngas discharged from the reactor with the heat storage medium; and/or a second mode in which heat is supplied to the mixed gas by heat-exchanging the mixed gas fed through the mixed gas supply line with the heat storage medium.

In a further independent aspect, the heat storage medium, in particular the molten salt microwave reactive catalyst mixture, which includes the catalyst with the carbon body, and which optionally may be characterized by the particular materials disclosed herein, may be used in ammonia synthesis systems and methods generally and in particular for supplying heat to a mixed gas of the ammonia synthesis system and method, typically by heat-exchanging the mixed gas with the heat storage medium.

Other aspects, features, and advantages of the embodiments of the present disclosure will become apparent to those with ordinary skill in the art from the detailed description of example embodiments in conjunction with the following drawings.

### BRIEF DESCRIPTION OF THE DRAWINGS

FIG. 1 is a schematic side cross-sectional view showing an ammonia synthesis system according to an embodiment of the present disclosure.
FIG. 2 is a schematic side cross-sectional view showing an ammonia synthesis system according to another embodiment of the present disclosure.
FIG. 3 is a perspective view of a distribution plate with a plurality of mixed gas flow pipes according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a schematic side cross-sectional view showing a backflow prevention cap of a backflow prevention plate in a closed position according to an embodiment of the present disclosure.
FIG. 7 is a schematic side cross-sectional view showing the backflow prevention cap of the backflow prevention plate in an opened position according to an embodiment of the present invention.

### DETAILED DESCRIPTION

Various advantages and features of the embodiments of the present disclosure and methods for accomplishing the same will become apparent to the skilled person of the art from the embodiments and examples described in detail below. However, it is noted that the embodiments of the present disclosure are not limited only to the embodiments and examples disclosed below, and may be implemented in various different forms. These embodiments and examples are provided only for making the present disclosure complete and for allowing those skilled in the art to fully appreciate the scope of the present disclosure as defined by the claims.

Unless defined otherwise, all terms (including technical and scientific terms) used in the specification have the same meanings as meanings commonly understood by those skilled in the art to which the present disclosure pertains.

Terms of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower" or "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

Hereinafter, an ammonia synthesis system of the present disclosure is described in detail. However, the embodiments are only illustrative, and the present disclosure is not limited to the specific embodiments described.

According to an embodiment of the present disclosure an ammonia synthesis system includes an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a mixed gas heat exchanger for supplying heat to the mixed gas by heat-exchanging the mixed gas fed through the mixed gas supply line with a heat storage medium.

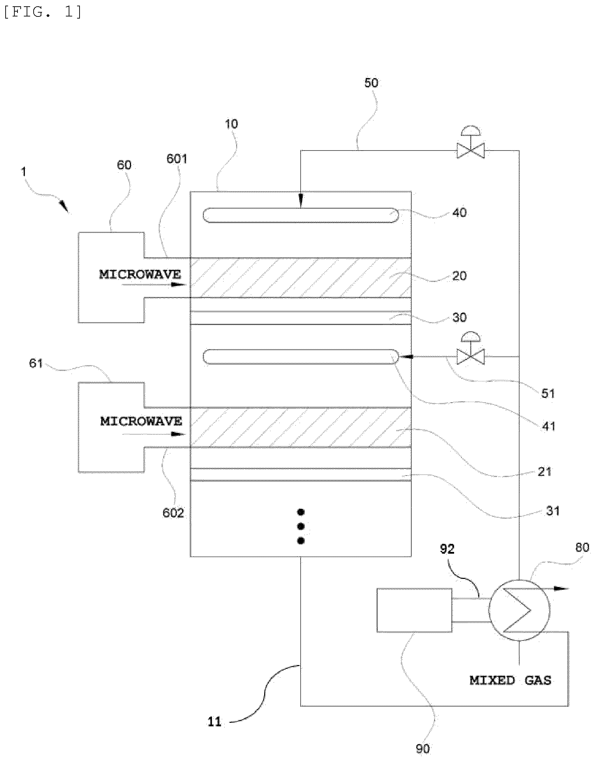

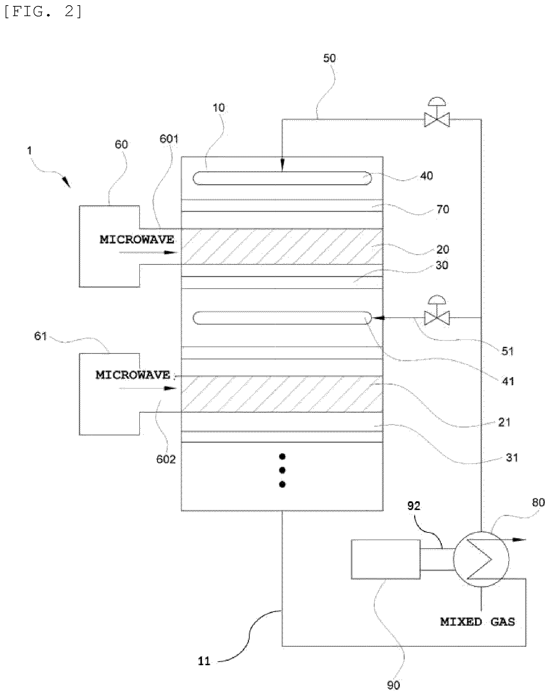

Referring now to FIGS. 1 and 2, according to an embodiment of the present disclosure, an ammonia synthesis system 1 includes an ammonia synthesis reactor 10 having two or more catalyst beds 20 and 21. Backflow prevention plates 30 or 31 may be disposed downstream from each of the catalyst beds for preventing the backflow of the mixed gas. Distribution devices 40 or 41 may be disposed upstream from each of the two or more catalyst beds 20 and 21 for distributing the mixed gas to the respective catalyst bed 20 or 21. Mixed gas supply lines 50 and 51 may be arranged to supply the mixed gas to each distribution device 40 or 41, and a microwave heating device 60 or 61 may be configured for emitting the microwaves to each of the two or more catalyst beds 20 and 21.

Syngas 11 including synthesized ammonia, nitrogen, and hydrogen discharged from the ammonia synthesis reactor 10 may be heat-exchanged with the heat storage medium 92 by a mixed gas heat exchanger 80 to supply heat to the heat storage medium 92. An ammonia synthesis reaction produced by the ammonia synthesis reactor 10 may be an exothermic reaction, and the syngas 11 discharged from the above ammonia synthesis reactor 10 may thus include a large amount of heat due to the exothermic reaction. Therefore, a large amount of heat included in the syngas 11 may be supplied to the heat storage medium 92 by the mixed gas heat exchanger 80. Heat energy may thus be stored in the heat storage medium 92, and the stored heat energy may be used when needed, thereby improving energy efficiency of the entire ammonia synthesis system 1.

The mixed gas fed through the mixed gas supply line 50 or 51 may be heat-exchanged with the syngas by the mixed gas heat exchanger 80 as described above, and exchange heat with the heat storage medium 92, thereby being supplied with the heat energy. For example, the mixed gas supplied with heat by heat-exchanged with the heat storage medium 92 by the mixed gas heat exchanger 80 may be fed through the mixed gas supply line to preheat the catalyst beds 20, 21 at the beginning of an operation of the ammonia synthesis system 1 or the catalyst bed 20 that is not preheated sufficiently when it is placed back into operation after it was taken off-line during the low flow rate operation, thereby improving the ammonia synthesis yield.

For example, when the raw material feed has a low flow rate, the ammonia synthesis system may be operated for the gas to pass through the catalyst bed 21 disposed at the bottom of the reactor 10 rather than the catalyst bed 20 disposed at the top of the reactor 10. When the mixed gas is not fed into the catalyst bed 20, its temperature is decreased over time. If the catalyst bed 20 is used again after this decrease, the ammonia synthesis efficiency may be lower because the temperature of the catalyst bed 20 is low. To solve this issue, the mixed gas supplied with heat by heat-exchanged with the heat storage medium 92 by the mixed gas heat exchanger 80 may be fed into the catalyst bed 20 to increase its temperature (which is disposed at the top of the reactor 10 in this embodiment), thereby achieving excellent ammonia synthesis efficiency even when the catalyst bed 20 is used again for the operation after it was taken off line during the low flow rate operation.

In addition, a large amount of heat included in the syngas 11 may be supplied to the heat storage medium 92 by the mixed gas heat exchanger 80. Heat energy may thus be stored in the heat storage medium 92, and the stored heat energy may be supplied to the mixed gas fed back into the reactor 10, thereby improving the energy efficiency of the entire ammonia synthesis system 1.

A plurality of mixed gas heat exchangers 80 may be arranged for heat-exchanging each of the mixed gas supplied to the individual mixed gas supply lines with the heat storage medium. Each mixed gas heat exchanger may be disposed for heat-exchanging the mixed gas before being branched and supplied to each of the mixed gas supply lines with the heat storage medium, however, the embodiments are not limited only to this configuration.

Hereinafter, the ammonia synthesis system 1 including two catalyst beds 20, 21 is described as an example of the ammonia synthesis system 1 of the present disclosure. However, it is noted that the ammonia synthesis system according to embodiments of the present disclosure may include multiple, i.e. two or more, for example, three, four, five, seven, eight, nine, or ten catalyst beds.

This is indicated by the dotted lines in Figs. 1 and 2, noting that corresponding components like microwave heating device, mixed gas supply lines, flow regulating devices, distribution devices, backflow prevention plates (optionally except for the catalyst bed disposed at the lowest of the two or more catalyst beds) may independently be provided for each or some of the multiple catalyst beds.

The ammonia synthesis system 1 according to an embodiment of the present disclosure may manage effciently the change in the flow rate that occurs during the production cycle by including the mixed gas supply line to supply the mixed gas to each of the two or more catalyst beds, 20, 21. For example, the ammonia synthesis system may be operated by feeding the gas through the mixed gas supply line 50 disposed at the top for the gas to first pass through the catalyst bed 20 disposed at the top of the reactor 10 when the flow rate of the raw material feed is high, and operated by feeding the gas through the mixed gas supply line 51 disposed at the bottom of the reactor 10 for the gas to pass through the catalyst bed 21 disposed at the bottom of the reactor 10 rather than the catalyst bed 20 disposed at the top of the reactor 10 when the flow rate of the raw material feed is low. Backflow of the mixed gas may be prevented by the backflow prevention plate 30 when the mixed gas is fed through the mixed gas supply line 51 disposed at the bottom to pass through the catalyst bed 21 disposed at the bottom of the reactor 10.

Here, in the specification, the flow rate that can be changed during the production cycle may be classified into three categories for convenience. As described above, the flow rate may be classified into a low flow rate, a medium flow rate, and a high flow rate. However, the change in the flow rate may be easily regulated by the common sense or judgment of those skilled in the art. The low flow rate case indicates a case where the flow rate is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

In the low flow rate case as described above, there is no need to maintain a temperature of the entire reactor because the ammonia synthesis system may be operated by feeding the mixed gas through the mixed gas supply line 51 disposed at the bottom of the reactor 10 for the gas to pass through the catalyst bed 21 disposed at the bottom of the reactor 10. Therefore, energy may be saved by optimizing an amount of energy required by the system during its operation.

In addition, the ammonia synthesis system 1 may increase the catalyst replacement cycle by using each catalyst bed more uniformly during its operation compared to existing conventional systems. In general, when a reaction fluid has the low flow rate, distribution performance at the top of the catalyst bed may be reduced, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to lower distribution performance caused by a reduced flow rate. However, the catalyst replacement cycle may be increased relatively uniformly using the catalyst beds if a height of the catalyst bed through which the gas passes is changed based on the flow rate and the distribution performance of each catalyst bed is improved, as in the ammonia synthesis system according to the present disclosure.

In an embodiment according to the present disclosure, the ammonia synthesis system may further include a storage tank for storing the heat storage medium.

A storage tank 90 for storing the heat storage medium may be connected to the mixed gas heat exchanger 80 to supply the heat storage medium 92 to the mixed gas heat exchanger, and store the heat storage medium heat-exchanged by the mixed gas heat exchanger 80. The number of the storage tanks may vary and may be, for example, one, two or more, three or more, five or more, twenty or fewer, ten or fewer, seven or fewer, five or fewer, or a value between these values, and is not limited thereto. In addition, when two or more storage tanks are provided, the storage tanks may be connected in series or parallel with each other, and the embodiments are not limited thereto. In addition, the storage tank 90 may separate and store the heat storage medium 92 supplied with heat and the heat storage medium after supplying heat.

According to an embodiment of the present disclosure, the heat storage medium 92 may include at least one selected from the group consisting of molten salt, heat conducting oil, volcanic rock, concrete, and silicon. In an embodiment, the heat storage medium 92 may include the molten salt. The molten salt may be particularly suitable as the heat storage medium because the molten salt has high density, high heat capacity, and high thermal stability even at a high temperature. The molten salt may include, for example, a nitrate-based molten salt. Other suitable molten salts may be used.

In an embodiment according to the present disclosure, the mixed gas heat exchanger 80 may include a multi-fluid heat exchanger. The multi-fluid heat exchanger may include separate flow paths for two or more types of fluid flows heated or cooled by a third fluid flow. For example, the multi-fluid heat exchanger may be a three-fluid heat exchanger, but is not limited thereto.

In the ammonia synthesis system according to the present disclosure, the mixed gas heat exchanger 80 may be a multi-fluid heat exchanger. Through this configuration, the syngas including synthesized ammonia, nitrogen, and hydrogen discharged from the ammonia synthesis reactor 10 may be heat-exchanged with the heat storage medium by the mixed gas heat exchanger 80 to supply heat to the heat storage medium. In addition, the mixed gas fed through the mixed gas supply line 50 or 51 may be heat-exchanged with the heat storage medium storing the heat energy by the mixed gas heat exchanger 80, thereby being supplied with heat. In this way, when two types of heat exchange are performed by one heat exchanger, costs incurred for facility investment may be reduced.

As described above, the heat exchange in which the syngas supplies heat to the heat storage medium and the heat exchange in which the heat storage medium supplies heat to the mixed gas may be performed by the mixed gas heat exchanger 80, or may be performed independently by different heat exchangers. In this case, each of the different heat exchangers 80 may include separate storage tanks 90 for independently storing the heat storage medium 92.

In an embodiment according to the present disclosure, the ammonia synthesis system may further include the microwave heating device 60, 61 for emitting microwaves to each of the two or more catalyst beds for heating the catalyst beds. The ammonia synthesis system 1 according to an embodiment of the present disclosure may include the microwave heating devices 60 and 61 for reducing or elimintaing a temperature deviation between the central and outer parts of each of the catalyst beds at the beginning of its operation, thereby improving an ammonia synthesis yield. For example, the microwave heating device 60, 61 may reduce temperature deviation in and between the central and outer parts of their respective catalyst beds 20, 21 by emitting microwaves to their respeecive catalyst beds 20, 21 at the beginning of their operation. In addition, use of the the microwave heating device or devices may improve the ammonia synthesis yield at the beginning of the operation by preheating the catalyst bed or beds if not sufficiently preheated at the beginning of an operation.

For example, when the raw material feed has low flow rate, the ammonia synthesis system 1 may be operated for the mixed gas feed material to pass through the catalyst bed 21 disposed at the bottom of the reactor 10 rather than the catalyst bed 20 disposed at the top of the reactor 10. In this mode of operation when the feed rate of the mixed gas is lower than a threshold value, the mixed gas is not fed into the catalyst bed 20 disposed at the top of the reactor 10, and as a result a temperature of the catalyst bed 20 is decreased over time. When the catalyst bed 20 disposed at the top of the reactor 10 needs to be used again after this decrease, the ammonia synthesis efficiency may be lower because the temperature of the catalyst bed 20 has decreased. To solve this issue, the embodiments preheat the catalyst bed 20 before it is placed back on-line using microwaves emitted by the microwave heating device 60. The preheating allows achieving substantially improved ammonia synthesis efficiency even when the catalyst bed 20 is used again for the operation after it was taken off-line during a low flow operation for some time. When the microwave emission using the microwave heating device and the mixed gas fed by heat-exchanging with the heat storage medium as described above are used together, the preheating of the catalyst bed may be maximized compared to a case of using only one of the two items, thereby achieving an excellent ammonia synthesis efficiency.

One or more, two or more, three or more, four or more, five or more, six or more, seven or more, or eight or more microwave heating devices may be installed on each catalyst bed, and the number of microwave heating devices is not limited thereto. The number of the microwave heating devices may be increased based on a size of the reactor. Also, an installation location of the microwave heating devices may be adjusted for efficient microwave emission.

The ammonia synthesis system may further include microwave guides 601 and 602. The microwave guides may enable the microwaves emitted by the microwave heating device to reach the catalyst bed more efficiently. The shape or installation location of the guides may be changed based on a microwave waveform.

In an embodiment according to the present disclosure, the number of catalyst beds may be two or more, three or more, four or more, five or more, six or more, seven or more, eith or more, nine or more, ten or more, twenty or fewer, ten or fewer, nine or fewer, eight or fewer, seven or fewer, six or fewer, five or fewer, four or fewer, three or fewer, two or fewer, or a value between these values. The number of catalyst beds and the number of distribution devices may be the same.

In an embodiment according to the present disclosure, the mixed gas may include at least one selected from the group consisting of hydrogen and nitrogen.

In an embodiment according to the present disclosure, the syngas may include at least one selected from the group consisting of synthesized ammonia, hydrogen, and nitrogen.

Hydrogen may be produced by a device powered by renewable energy. For example, hydrogen may be produced by a water electrolyzer powered by renewable energy, such as solar, wind, and the like.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at the constant flow rate. The ammonia synthesis system of the present disclosure addresses this issue and can manage effciently changes in the raw material flow rate that occur during the production cycle due to the temporal variability of renewable energy.

In addition, the mixed gas having a low temperature may be supplied through the mixed gas supply line 50 or 51. Therefore, the mixed gas supplied through the mixed gas supply line 50 or 51 may function as cooling mixed gas, and may also function as a means of cooling the mixed gas flowing in the ammonia synthesis system. For example, the mixed gas having the low temperature may be used as the cooling means to cool the mixed gas fed into the catalyst bed. In this case, the mixed gas having the low temperature may be the mixed gas after heat-exchanging with the heat storage medium by the heat exchanger and supplying heat to the heat storage medium.

The ammonia synthesis system according to an embodiment of the present disclosure may further include distribution plates 70 and 71 each disposed between each one of the catalyst beds 20 or 21 and its respective distribution device 40 or 41.

In addition, the ammonia synthesis system according to an embodiment of the present disclosure may further include a plurality of mixed gas flow pipes 720 which are fixed to a lower surface 72 of the distribution plate 70 or 71 and through which the mixed gas flows.

The ammonia synthesis system may further include the distribution plate and the mixed gas flow pipe 720, thereby maintaining the uniform flow rate distribution upstream ofthe catalyst bed included in the ammonia synthesis reactor even when the flow rate of the fed raw material such as hydrogen is reduced.

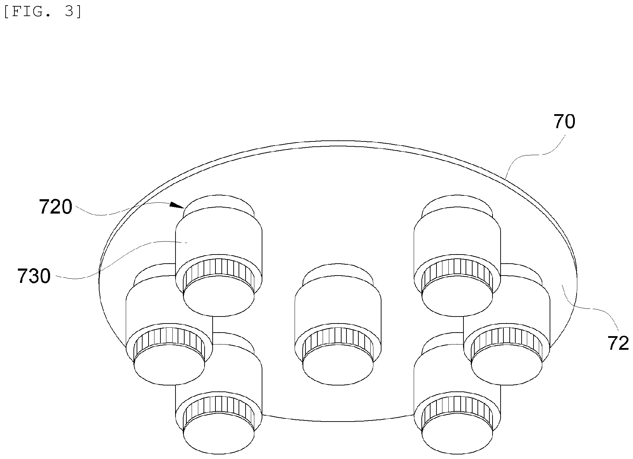

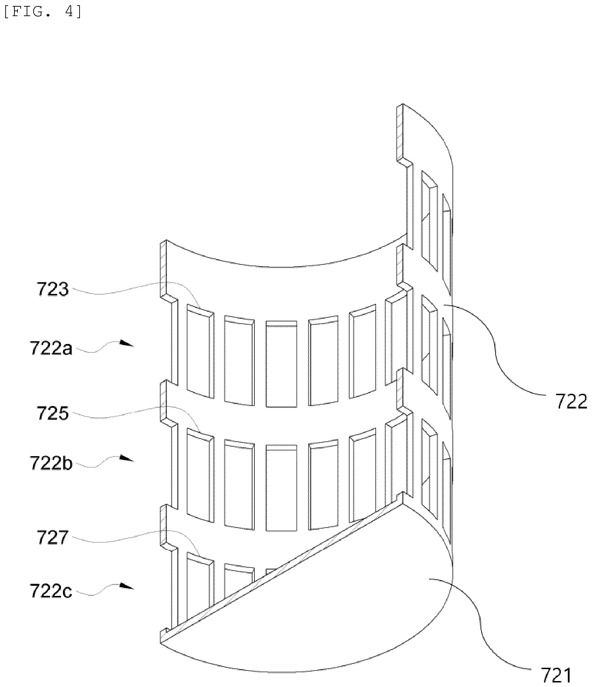

Referring to FIGS. 3 and 4, the mixed gas flow pipe 720 may have a bottom surface 721 and a side surface 722 connecting the bottom surface with the distribution plate. The side surface 722 may be divided into an upper part 722a, a nmiddle part 722b and a lower part 722c.

A plurality of upper openings 723 may be formed in a side surface of the upper part 722a of the mixed gas flow pipe 720 spaced apart from each other along a circumference of the upper part 722a of the mixed gas flow pipe 720, a plurality of middle openings 725 may be formed in a side surface of a middle part 722b of the mixed gas flow pipe 720 spaced apart from each other along the circumference of the middle part 722b of the mixed gas flow pipe 720, and a plurality of lower openings 727 may be formed in a side surface of a lower part 722c of the mixed gas flow pipe 720 spaced apart from each other along the circumference of the lower part 722c of the mixed gas flow pipe 720. A flow of the mixed gas may be formed through the upper openings 723, the middle openings 725, and the lower openings 727. The mixed gas flow pipe 720 may include a cover 730 surrounding at least some regions of the side surface of the mixed gas flow pipe 720 to provide a space for the fluid flowing out of the side surface of the mixed gas flow pipe 720 after passing through the upper opening 723 to be guided toward the middle opening 725. The cover 730 may surround at least one selected from the group consisting of the upper and middle parts of the side surface of the mixed gas flow pipe 720.

The cover 730 may cause the fluid flowing out of the side surface of the mixed gas flow pipe 720 after passing through the upper opening 723 to be guided toward the middle opening 725. This configuration may form a flow in which the fluid is moved to the outside of the side surface of the mixed gas flow pipe 720 and then moved back to the inside of the side surface. Through this meander-shape flow path, the fluids may be mixed more effectively and smoothly with each other. Better mixing is highly beneficial because it can increase the reaction rate and overall business efficiency. Better mixing can also improve catalyst utilization and reduce catalyst hot spots.

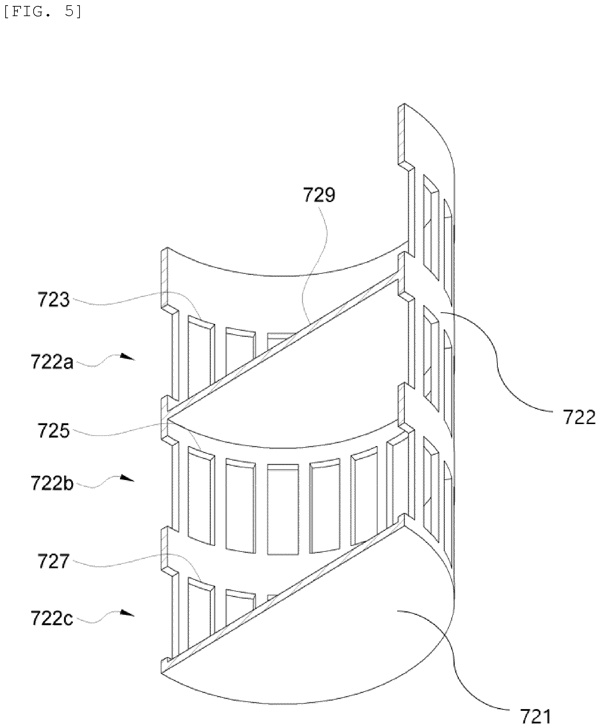

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the movement of the fluid. More specifically, the separator plate forces the fluid flow of the mixed gas which enters a mixed gas flow pipe 720 to exit the upper part of the mixed gas flow pipe 720 through the upper openings 723 into the side space created by the cover 730 and then back into the middle part of the mixed gas flow pipe 720 through the middle openings 725. Therefore, the fluid flowing into the upper part of the mixed gas flow pipe 720 may flow out through the upper openings 723 into the space between the mixed gas flow pipe 720 and the cover 730 rather than descending directly to the middle part, by the separator plate 729. The fluid in the space may then flow into the mixed gas flow pipe through the middle openings 725, descend downwards, and flow out of the mixed gas flow pipe 720 through the lower openings 727. The fluid in the lower part of the mixed gas flow pipe 720 may not exit via the bottom surface 721 of the mixed gas flow pipe 720 and is forced to exit via the lower openings 727. As described above, the fluid may form the flow in which the fluid flows out of the mixed gas flow pipe 720, flows back into the inside of the pipe, and flows out of the pipe again, thereby mixing the fluids more smoothly, and maintaining the uniform flow rate distribution before the catalyst bed.

In an embodiment according to the present disclosure, each of the mixed gas supply lines 50 and 51 may independently include a flow regulating device. The flow regulating device may enable the flow rate of the mixed gas to be controlled independently in each of the mixed gas supply lines. For example, the flow regulating device may independently regulate the flow rate of the mixed gas flowing through each of the mixed gas supply lines for the flow rate of the mixed gas entering the distribution device to be maintained within a desired flow rate range. The flow regulating device may for example be a flow regulating valve.

In an embodiment according to the present disclosure, each of the mixed gas supply lines 50 and 51 may branch from one main supply line. Alternatively, each of the mixed gas supply lines 50 and 51 may receive at least one gas selected from the group consisting of nitrogen and hydrogen from each of individual supply lines. The mixed gas heat exchanger may be installed in one main supply line or may be installed upstream of each of the mixed gas supply lines.

In an embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save the energy by optimizing the amount of energy required by the system as needed during its operation, and increase the catalyst replacement cycle by using each catalyst bed uniformly.

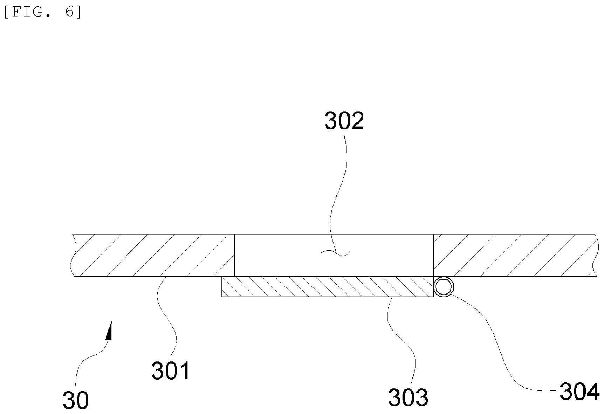

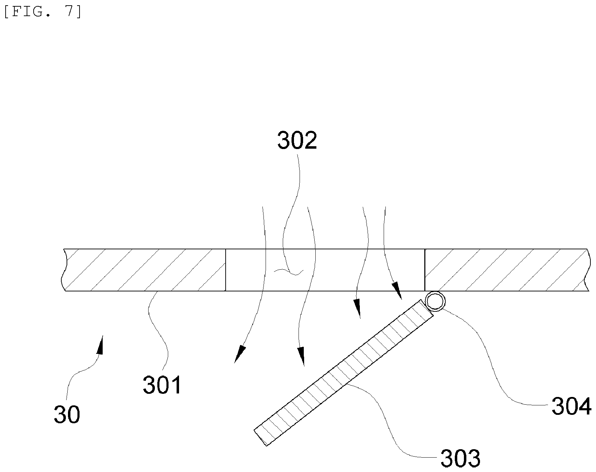

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas flows from the downstream to upstream of the backflow prevention plate 30 or 31, the backflow prevention cap 303 may be closed by the flow of the mixed gas flowing from the downstream to the upstream. By this principle, the backflow prevention plate 30 or 31 according to the present disclosure may prevent the backflow of the mixed gas.

In an embodiment according to the present disclosure, a coupling part of the hinge 304 that is coupled to the hinge 304 may include a spring to apply an elastic force in a direction in which the backflow prevention cap 303 approaches the distribution plate.

In an embodiment according to the present disclosure, the distribution device 40 or 41 may have a disk shape or a toroidal shape, but is not limited thereto, and may use a conventional gas distribution device.

In an ammonia synthesis method according to an embodiment of the present disclosure, ammonia may be synthesized at 1 to 500 bar or 10 to 300 bar.

In an ammonia synthesis methodaccording to an embodiment of the present disclosure, ammonia may be synthesized at 100 to 800°C or 200 to 700°C.

The ammonia synthesis system according to an embodiment of the present disclosure may further include a cooling heat exchanger disposed downstream from each of the two or more catalyst beds to remove heat from an effluent of the catalyst bed. The cooling heat exchanger may surround the catalyst bed or its surroundings. The ammonia synthesis system according to the present disclosure may include an additional heat removal means other than the supply of the cooling mixed gas by further including the cooling heat exchanger. This configuration may enable the flexible operation of the ammonia synthesis system.

In addition, an embodiment of the present disclosure may provide an operation method of an ammonia synthesis system. The same description may be applied to a content overlapping a content of the ammonia synthesis system.

One embodiment of the present disclosure may provide the operation method of the ammonia synthesis system, the method including the following modes performed by the ammonia synthesis system as described above: a first mode in which heat is supplied to the heat storage medium by heat-exchanging the syngas discharged from the reactor with the heat storage medium; and/or a second mode in which heat is supplied to the mixed gas by heat-exchanging the mixed gas fed through the mixed gas supply line with the heat storage medium.

According to the operation method of the ammonia synthesis system, a large amount of heat included in the syngas may be supplied to the heat storage medium to store the heat energy in the heat storage medium (the first mode), and the stored heat energy may be supplied again to the mixed gas fed into the reaction (the second mode), thereby improving the energy efficiency of the entire ammonia synthesis system. The first mode and the second mode may be performed independently or simultaneously.

For example, the first mode may be a mode in which the syngas including synthesized ammonia, nitrogen, and hydrogen discharged from the ammonia synthesis reactor 10 is heat-exchanged with the heat storage medium by the mixed gas heat exchanger 80 to supply heat to the heat storage medium. The ammonia synthesis reaction produced by the ammonia synthesis reactor may be an exothermic reaction, and the syngas discharged from the above ammonia synthesis reactor may thus include a large amount of heat according to the exothermic reaction. Therefore, a large amount of heat included in the syngas may be supplied to the heat storage medium by the mixed gas heat exchanger to thus store the heat energy in the heat storage medium, and the stored heat energy may be used, thereby improving the energy efficiency of the entire ammonia synthesis system.

The second mode may be a mode in which heat is supplied to the mixed gas by heat-exchanging the mixed gas fed through the mixed gas supply line 50 or 51 with the heat storage medium storing the heat energy. For example, the mixed gas supplied with heat by being heat-exchanged with the heat storage medium by the mixed gas heat exchanger 80 may preheat the catalyst bed at the beginning of the operation or the catalyst bed that is not preheated sufficiently because the catalyst that is not used and then reused to cope with the change in the flow rate, thereby improving the ammonia synthesis yield at the beginning of the operation.

For example, when the fed raw material has the low flow rate, the ammonia synthesis system may be operated for the gas to pass through the catalyst bed 21 disposed at the bottom rather than the catalyst bed 20 disposed at the top. Here, the mixed gas may not be fed into the catalyst bed 20 disposed at the top, and the temperature of the catalyst bed 20 disposed at the top may thus be decreased over time. If the catalyst bed 20 disposed at the top is used again after this decrease, the ammonia synthesis efficiency may be lower because the temperature of the catalyst bed 20 disposed at the top is decreased. Here, the mixed gas supplied with heat by heat-exchanged with the heat storage medium by the mixed gas heat exchanger 80 may be fed into the catalyst bed 20 disposed at the top and having the lower temperature, thereby achieving excellent ammonia synthesis efficiency even when the catalyst bed is used again for the operation.

As set forth above, the ammonia synthesis system according to an embodiment of the present disclosure may manage effciently the change in the flow rate that occurs during the production cycle.

The ammonia synthesis system according to another embodiment of the present disclosure may maintain the uniform flow rate distribution upstream of the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by enabling the temperature deviation between the central and outer parts of the catalyst bed at the beginning of its operation.

The ammonia synthesis system according to an embodiment of the present disclosure may improve the ammonia synthesis yield at the beginning of its operation by preheating the catalyst bed at the beginning of its operation.

The ammonia synthesis system according to an embodiment of the present disclosure may save energy by optimizing the amount of energy required by the system during its operation.

The ammonia synthesis system and its operation method according to an embodiment of the present disclosure may improve the energy efficiency of the entire ammonia synthesis system by coping with the change in the flow rate that occurs during the production cycle.

The ammonia synthesis system according to an embodiment of the present disclosure may increase the catalyst replacement cycle by uniformly using each catalyst bed during the operation.

The ammonia synthesis system according to an embodiment of the present disclosure may synthesize ammonia in the eco-friendly manner.

The embodiments described above are only examples to which a principle of the present disclosure is applied, and may further include other embodiments or modifications of the described embodiments within the scope of the present disclosure as defined in the appended claims. Furthermore, the embodiments may be combined to form additional embodiments.

## Claims

1. An ammonia synthesis system comprising:
an ammonia synthesis reactor (10);
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of mixed gas;
a distribution device (40, 41) disposed upstream from each of the two or more catalyst beds (20, 21) for distributing the mixed gas to the catalyst bed (20, 21);
mixed gas supply lines (50, 51) arranged to supply the mixed gas to each distribution device (40, 41); and
a mixed gas heat exchanger (80) for supplying heat to the mixed gas by heat-exchanging the mixed gas fed through the mixed gas supply line (50, 51) with a heat storage medium (92) .

2. The system according to claim 1, further comprising a storage tank (90) for storing the heat storage medium (92).

3. The system according to claim 1 or 2, wherein the mixed gas heat exchanger (80) is a multi-fluid heat exchanger.

4. The system according to one of claims 1 to 3, wherein the heat storage medium (92) includes molten salt.

5. The system according to one of claims 1 to 4, further comprising a microwave heating device (60, 61) for emitting microwaves to each of the two or more catalyst beds (20, 21).

6. The system according to one of claims 1 to 5, further comprising distribution plates (70, 71) each disposed between the catalyst bed (20, 21) and the distribution device (40, 41).

7. The system according to claim 6, further comprising a plurality of mixed gas flow pipes (720) which are fixed to a lower surface of the distribution plate (70, 71) and through which the mixed gas flows.

8. The system according to claim 7, wherein:
each of the mixed gas flow pipes (720) has a bottom surface (721) and a side surface (722) connecting the bottom surface (721) with the distribution plate (70, 71),
a plurality of upper openings (723) are formed in a side surface (722) of an upper part (722a) of the mixed gas flow pipe (720) spaced apart from each other along a circumference of the pipe,
a plurality of middle openings (725) are formed in a side surface (722) of a middle part (722b) of the mixed gas flow pipe (720) spaced apart from each other along the circumference,
a plurality of lower openings (727) are formed in a side surface (722) of a lower part of the mixed gas flow pipe (720) spaced apart from each other along the circumference, and
optionally the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper opening (723) to be guided toward the middle opening (725), further optionally wherein the mixed gas flow pipe (720) further includes a separator plate (729) dividing the upper and middle parts (722b) of the mixed gas flow pipe (720) from each other.

9. The system according to one of claims 1 to 8, wherein each of the mixed gas supply lines (50, 51) independently includes a flow regulating device.

10. The system according to one of claims 1 to 9, wherein each of the backflow prevention plates (30, 31) includes a plurality of openings (302), and
wherein each of the plurality of openings (302) included in each of the backflow prevention plates (30, 31) has a backflow prevention cap (303) selectively opened based on a flow direction of the gas, preferably wherein the backflow prevention cap (303) is coupled to a hinge (304) disposed at a position on each circumference part of the plurality of openings (302) included in each of the backflow prevention plates (30, 31), optionally wherein a coupling part of the hinge (304) that is coupled to the hinge (304) includes a spring to apply an elastic force in a direction in which the backflow prevention cap (303) approaches the distribution plate (70, 71).

11. The system acording to one of claims 1 to 10, wherein the distribution device (40, 41) has a disk shape or a toroidal shape.

12. The system according to one of claims 1 to 11, further comprising a cooling heat exchanger disposed downstream from each of the two or more catalyst beds (20, 21) to remove heat from an effluent of the catalyst bed (20, 21) .

13. A method for ammonia synthesis using an ammonia synthesis system according to one of claims 1 to 12.

14. method of claim 13, wherein ammonia is synthesized in the ammonia synthesis system at 10 to 300 bar, and/or wherein ammonia is synthesized in the ammonia synthesis system at 200 to 700°(.

15. The method according to claim 12 or 13, wherein the method comprises the following modes performed by the ammonia synthesis system:
a first mode in which heat is supplied to the heat storage medium (92) by heat-exchanging syngas discharged from the reactor (10) with the heat storage medium (92); or
a second mode in which heat is supplied to the mixed gas by heat-exchanging the mixed gas fed through the mixed gas supply line (50, 51) with the heat storage medium (92); or
both the first mode and the second mode.
